Europäisches Patentamt

European Patent Office

Office européen des brevets

(11) Publication number: 0 217 990
A1

# EUROPEAN PATENT APPLICATION

(21) Application number: 85306996.1

(22) Date of filing: 01.10.85

(51) Int. Cl.4: **E04C 2/26** , E01C 5/22 , E04F 15/02

(43) Date of publication of application:
15.04.87 Bulletin 87/16

(84) Designated Contracting States:
BE DE FR GB IT LU NL SE

(71) Applicant: **Thompson, Thomas L.**
1515 Ocean Boulevard
Balboa California 92661(US)

(72) Inventor: **Thompson, Thomas L.**
1515 Ocean Boulevard
Balboa California 92661(US)

(74) Representative: **Prentice, Raymond Roy**
R.R. Prentice & Co. 34 Tavistock Street
London WC2E 7PB(GB)

(54) Fiber cement structural panel.

(57) A fiber-cement/plywood structure providing a preformed surface material for architectural structures including walls, flooring, decking, walkways and roadways, the material being particularly suitable for use with marine dock structures and other structures in wet environments, is formed by applying a coating of a polyester or catalyzed resin (32) over one surface of a sheet of plywood substructure (26) so as to seal the substructure as the resin hardens, and also coating one surface of a fiber-cement sheet (28) with a polyester or catalyzed resin (30) and allowing it to harden. A bonding agent (38), which comprises a catalyzed polyester or epoxy resin mixed with a thickening agent, such as mill fibers or finely chopped fiberglass strands, is applied between the two facing resin surfaces of the respective plywood sheet (26) and the fiber-cement sheet - (28), whereby the two sheets are bonded together so as to form a single, somewhat resilient, weatherproof and wear-resistant structure or panel. An alternative arrangement is also provided wherein the substructure is a thick plastic-foam core encased in a fiberglass and polyester resin.

FIG. 2

# FIBER CEMENT STRUCTURAL PANEL

This invention relates to architectural and structural panels, and more particularly to panels having a combination sheet of plywood and sheet of fiber-cement sealed and bonded together to form a resilient weatherproof and wear-resistant structure for architectural construction including walls and areas subjected to heavy foot traffic such as walkways and marine decking.

Various problems and difficulties are being encountered in attempts to provide suitably structured, architectural, all-weather surfaces, particularly with respect to those surfaces associated with marine-dock systems and other surfaces in wet or damp environments.

In this area, various types of surfaces have been tried without success, the two most commonly used surface materials comprising wood products or cement. Surface structures composed of wood are generally formed from a multiplicity of juxtaposed plank members positioned transversely across the deck or walkway.

The cement walkway or surface structure is usually formed in a long rectangular slab configuration having a thickness of from 2.54 to 5.08cm (one to two inches). Even though cement slabs are becoming more popular over wood surfaces in the construction of marinas and other floating dock structures, there are two inherent problems that exist. First, cement slabs are very heavy and add considerable weight to an already large and heavy structure; and they are cumbersome and difficult to handle. Second, this type of slab is not resilient and has a tendency to crack when subjected to adverse weather conditions which tend to cause dock fingers and walkways to twist and flex in turbulent water.

The present invention aims to provide architectural walls, walkways or decking that overcome the above-mentioned problems -especially with respect to heavily travelled pedestrian surfaces which require lightweight, wear-resistant, waterproof materials.

Another aim of the invention is to provide a fiber-cement/plywood panel structure that is lightweight, strong and resilient so that it can flex without cracking, and can be used to establish various architectural structures.

Still another aim of the invention is to provide a fiber-cement/plywood panel for the construction of decking, particularly for use in marine areas.

According to one aspect of the invention, there is provided a method of forming a fiber-cement panel for an architectural and/or a flooring surface, comprising the steps of:

providing a sheet of fiber-cement which defines said architectural and/or flooring surface;

providing a sheet of plywood having a size substantially the same as that of said fiber-cement sheet; and

bonding said fiber-cement sheet to said plywood sheet, wherein a bonding material is interposed between said sheets.

One surface of each of the fiber-cement sheet and the plywood sheet may be coated with a catalyzed resin material to seal the surfaces, the bonding material being interposed between the coatings on the sheets.

Another aspect of the present invention provides a floating dock structure having a fiber-cement deck structure, wherein said fiber-cement deck structure comprises:

a first panel member defining a sub-decking formed from a sheet of plywood;

a second panel member defining a walking surface formed from a fiber-cement sheet and secured to said first panel; and

means for securing said second panel to said first panel in a sealed permanent manner.

Preferably, the securing means comprises:

a first bonding layer of catalyzed resin material coated on the top surface of said sheet of plywood;

a second bonding layer of catalyzed resin material coated on the underside of said fiber-cement sheet; and

a third intermediate layer of catalyzed resin material interposed between said first and second bonding layers.

The fiber-cement sheet preferably consists of cement, crushed limestone, volcanic ash and fibrous material.

The invention will now be further described, by way of example, with reference to the drawings, in which:-

Fig.1 is a side-elevational view of a floating dock section having a fiber-cement/plywood panel according to the invention mounted on the surface structure of the deck thereof;

Fig. 2 is an enlarged cross-sectional view taken transversely along the longitudinal edge of the deck;

Fig. 3 is an enlarged cross-sectional view taken longitudinally across the transverse abutting ends of two panels;

Fig. 4 is a cross-sectional view of the panel showing an additional fastening means between the fiber-cement panel section and the plywood panel section;

Fig. 5 is a partial perspective view of the combined panel mounted on a floatable dock section; and

Fig. 6 is a cross-sectional view of an alternative arrangement of the present invention.

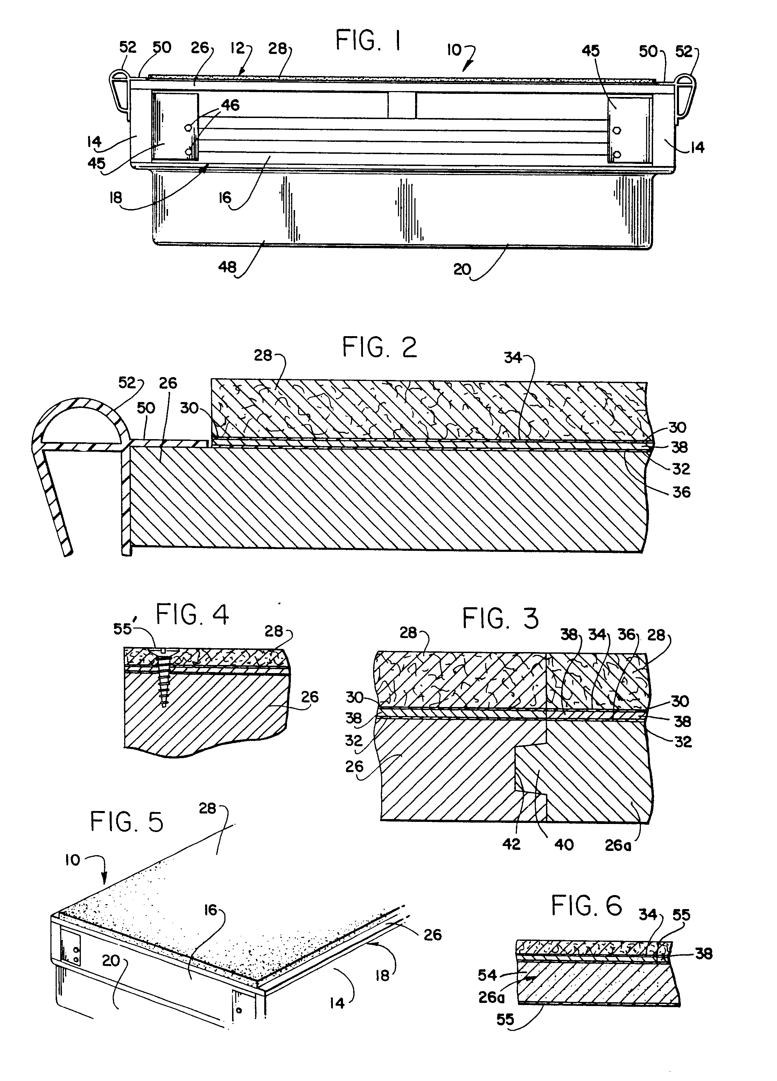

Referring more particularly to Fig. 1, there is illustrated a section of a typical floatable marine dock, indicated generally at 10, having mounted thereon decking, generally designated at 12, which represents the present invention.

As previously mentioned above, there are several areas of application for which the present invention is well suited; but it is herein shown and described in connection with marine dock structures, since the decking made with panels according to the invention is particularly suited for the special conditions and requirements associated with marine-related structures.

Figs. 1 and 5 show a typical floatable dock 10 formed by oppositely disposed longitudinal side walers 14 held in place by transverse timber members 16, defining a continuous rectangular frame structure 18. Attached to the lower or bottom side of the frame structure is a floatation unit 20 having a somewhat rectangular box-like shape.

The deck structure 12 comprises a sub-deck having a thickness of approximately between 1.90 and 3.81cm (3/4" and 1-1/2"), the preferable specification requiring a 2.86cm (1-1/8") thick Grade CC exterior plywood panel 26, pressure-preservative treated, which is secured to the longitudinal walers 14 by fastening means such as 16d common hot-dip galvanized nails. Affixed to one side of the plywood surface is a layer of top decking 28, consisting generally of a combination fiber-cement material with an approximate thickness of 0.64cm - (1/4"), having a non-skid surface with a modulus of rupture of approximately 14632Kg/cm² - (5000lbs./sq.in.) along the width and 11120.32Kg/cm² (3800lbs./sq.in.) along the length, a compressive strength of approximately 35116.8Kg/cm² (12000lbs./sq.in), a tensile strength of approximately 585.28Kg/cm² (200lbs./sq.in.) along the width, and approximately 3950.64Kg/cm² (1350lbs./sq.in) along the length.

However, a particular method must be followed to form the deck structure so as to provide the permanent bonding of the top deck 28 to the plywood sub-deck 26. This method comprises the forming of a relatively thin, approximately 0.635 cm (1/4"), fiber-cement sheet or panel consisting of combining 36 percent Portland cement; 30 percent crushed limestone; 20 percent Possolan (Italian) Volcanic ash; and 14 percent suitable fibrous material approximately 1.59cm (5/8") long, such as silky glass fibers. This particular composition is highly resistant to salt corrosion, has excellent chemical resistance, and has resilient qualities to prevent cracking when subjected to constant movement, particularly with respect to a floating dock structure supported in a body of water, in which case the panels bend and twist to some extent. When fiber-cement panels are formed with a thicker cross-section, they tend to be less resilient and break more readily.

After the fiber-cement panel 28 is formed, one surface is coated with a catalyzed resin material which is allowed to harden. This coated surface will be referred to as the under-surface 30. The other surface which is the plywood sub-deck panel 26 is likewise coated with a catalyzed resin material which is allowed to harden, this coated surface being referred to as the top surface 32 of plywood panel 26. The catalyzed resin material used for the coating is applied in a thin liquid state, and is preferably an epoxy resin.

When undersurface 30 and top surface 32 are both resin-hardened, they define respective bonding layers 34 and 36 which provide a means for sealing the respective surfaces 30 and 32. This allows the fiber-cement panel and the plywood panel to be permanently bonded together by an intermediate bonding agent layer 38 which is formed from a catalyzed polyester resin or a catalyzed resin such as an epoxy, and may include a thickening agent such as mill fibers or finely chopped fiberglass strands, so as to establish a thixotropic condition, allowing the material to be applied by troweling a thick layer over one of the surfaces 30 or 32 but preferably the top surface 32 of the plywood panel. It is further preferred to use a multi-tooth-edged troweling tool, so that the entire surface is evenly covered in order to receive the coated undersurface of the fiber-cement panel. The two panels are brought together in a manner that prevents air pockets from forming between the sheets or panels 28 and 26; and to accomplish this, pressure is evenly applied to the panels by any suitable means. One means, for example, is to simply apply adequate pressure on the surfaces of one of the panels so that they will adhere tightly together until the bonding agent has hardened. However, under certain conditions the undersurface 30 and top surface 32 need not be resin-hardened for some types of resin materials. Accordingly, only the intermediate bonding agent layer 38 is required.

This two-part panel 12 will then be ready to be handled and employed with any type of structural assembly.

Also important in effecting a permanent walking surface is the incorporation of a coupling means between the abutting edges of the finished panel 10. The preferred coupling means, however, comprises a tongue-and-groove arrangement, wherein one abutting end or edge of plywood panel 26 is formed having a transverse tongue member 40 and the opposite end or edge is provided with a matching groove 42, as illustrated in Fig. 5. The grooved end of the plywood panel 26 is thus coupled to the tongue end of plywood panel 26a. Further, by providing an adequate thickness of the tongue and groove 40 and 42, respectively, additional strength is established therebetween so as to support the thin fiber-cement deck in a way that the latter will not be required to perform a structural function, since it is intended to act only as a long-wearing surface and is not designed to bear a vertical load. The tongue-and-groove arrangement further provides a continuous, uninterrupted surface. If the ends thereof were squared off, the abutting panels would move vertically (up and down) independently of each other, which would result in an uneven, discontinuous surface.

It is also contemplated that the fiber-cement panel 28 will be formed so that its width is smaller than the width of the sub-decking 26, as seen in Figs. 1, 2 and 5. That is, the plywood sub-decking 26 extends outwardly along the longitudinal edges 50. This extension allows bumper strips 52 to be secured thereto.

Fig. 4 illustrates a fastener such as a screw 55 being employed as an additional means for securing the surface panel 28 to the sub-decking 26, if necessary during the installation thereof.

The manufacture of floating docks is most efficiently accomplished on shore and not in the water. The method generally employed is to build the dock in sections, or modules, which are then placed into the water at the job site where the assembly of the sections is performed. The assembly in this manner requires that much of the deck area of the structure, particularly the decking of what is called the "head walk" is not installed until after the floating dock has been placed in the water, and the assembly of the modules by means of angle clips 45, splice blocks and through bolts 46 has been accomplished.

Therefore, it is desirable that the laminated fiber-cement/plywood deck sections 10 be pre-built before they are affixed in place on the assembled structure 48. The deck panels 12 are pre-built by the present method into sections that can be put in place by the simple means of affixing these sections with nails or screws to the assembled structure 48 in a one-by-one manner. This enables the worker to interface the tongue of one panel with the groove of the other in a sequential method until the entire deck area has been covered.

This same method of affixing these deck panels is used during the on-shore manufacturing phase of the sections known as "finger" sections which are usually built as complete units, and which need to be assembled to the headwalk only at one end.

Referring to Fig. 6, there is shown a fiber-cement panel having an alternative arrangement wherein the sub-decking 26a comprises a thick core of foam-plastic material 54 which is encased in a thin layer of polyester resin impregnated with fiberglass designated at 55. The deck panel 28 is formed, as heretofore described, with a bonding or sealing surface 34.

The invention and its attendant advantages will be understood from the foregoing description; and it will be apparent that various changes may be made in the form, construction and arrangement of the parts of the invention without departing from the scope thereof or sacrificing its material advantages, the arrangements hereinbefore described being merely by way of example.

## Claims

1. A method of forming a fiber-cement panel for an architectural and/or a flooring surface, comprising the steps of:

providing a sheet of fiber-cement which defines said architectural and/or flooring surface;

providing a sheet of plywood having a size substantially the same as that of said fiber-cement sheet; and

bonding said fiber-cement sheet to said plywood sheet, wherein a bonding material is interposed between said sheets.

2. A method according to claim 1, wherein one surface of the fiber-cement sheet is coated with a catalyzed resin material to seal said surface; and

one surface of said plywood sheet is coated with a catalyzed resin material to seal said surface; the bonding material being interposed between said coatings of said sheets.

3. A method according to claim 1 or claim 2, wherein said fiber-cement sheet is composed by combining cement, crushed limestone, volcanic ash, and a fibrous material.

4. A method according to claim 3, wherein said fiber-cement sheet consists of 36% cement; 30% crushed limestone; 20% volcanic ash; and 14% fibrous material.

5. A method according to any preceding claim, wherein said bonding material interposed between said sheets comprises a catalyzed resin.

6. A method according to claim 5, wherein said bonding material comprises a catalyzed epoxy resin or polyester resin mixed with a thickening agent.

7. A method according to any preceding claim, wherein said plywood sheet is formed having a tongue member along one abutting transverse edge thereof, and a matching groove along the oppositely disposed abutting transverse edge thereof.

8. A floating dock structure having a fiber-cement deck structure, wherein said fiber-cement deck structure comprises:

a first panel member defining a sub-decking formed from a sheet of plywood;

a second panel member defining a walking surface formed from a fiber-cement sheet and secured to said first panel; and

means for securing said second panel to said first panel in a sealed permanent manner.

9. A floating dock structure according to claim 8, wherein said securing means comprises:

a first bonding layer of catalyzed resin material coated on the top surface of said sheet of plywood;

a second bonding layer of catalyzed resin material coated on the underside of said fiber-cement sheet; and

a third intermediate layer of catalyzed resin material interposed between said first and second bonding layers.

10. A floating dock structure according to claim 9, wherein said bonding layers comprise a catalyzed epoxy resin.

11. A floating dock structure according to claim 8, wherein said securing means comprises an intermediate layer of catalyzed resin material interposed between said first and second panel members.

12. A floating dock structure according to any one of claims 8 to 11, wherein said fiber-cement sheet consists essentially of cement, crushed limestone, volcanic ash and fibrous material.

FIG. 1

FIG. 2

FIG. 4

FIG. 3

FIG. 5

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 517 239 (THOMPSON) <br> * Whole document * <br><br> ----- | 1-12 | E 04 C 2/26 <br> E 01 C 5/22 <br> E 04 F 15/02 |

|  |  |  | TECHNICAL FIELDS SEARCHED (Int. Cl.4) |
|---|---|---|---|
|  |  |  | E 04 C <br> E 01 C <br> E 04 F |

The present search report has been drawn up for all claims

| Place of search | Date of completion of the search | Examiner |
|---|---|---|
| THE HAGUE | 02-06-1986 | VANDEVONDELE J.P.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82